# FASCICULE DE BREVET EUROPEEN

(11) **EP 0 370 859 B1**
(45) Date de publication et mention de la délivrance du brevet: **12.01.1994**
(21) Numéro de dépôt: 89403107.9
(22) Date de dépôt: 10.11.1989
(51) Int. Cl.: B01D 63/02, B01D 65/00, B29C 67/12

(54) **Carter pour modules de filtration à faisceaux de fibres**
Gehäuse für Filtermodul mit Faserbündel
Casing for fibre bundle filtration modules

(30) Priorité: 21.11.1988 FR 8815099
(43) Date de publication de la demande: 30.05.1990
(73) Titulaire: LYONNAISE DES EAUX - DUMEZ, F-92000 Nanterre (FR)
(72) Inventeur: Espenan, Jean-Michel Bâtiment 2, F-31100 Toulouse (FR)
(74) Mandataire: Cournarie, Michèle

(56) Documents cités:
- EP-A- 0 335 760
- DE-A- 1 479 420
- FR-A- 1 307 284
- GB-A- 2 041 287
- GB-A- 2 053 725
- US-A- 4 698 116
- PATENT ABSTRACTS OF JAPAN, vol. 10, no. 112 (C-342)[2169], 25 avril 1986;& JP-A-60 241 905 (NITTO DENKI KOGYO K.K.) 30-11-1985
- PATENT ABSTRACTS OF JAPAN, vol. 11, no. 163 (C-424)[2610], 26 mai 1987;& JP-A-61 293 504 (KURITA WATER IND. LTD.) 24-12-1986

## Description

L'invention concerne un carter pour modules de filtration à faisceaux de fibres creuses ou membranes tubulaires.

Le brevet GB-A-2 053 725 olécrit un module de dialyse comportant un faisceau de fibres creuses.

Les fibres ou membranes tubulaires de filtration sont montées dans des carters sous forme de faisceaux contenus dans des manchons perforés dont les extrémités sont empotées dans des plaques de résine: ces carters sont munis latéralement d'orifices d'entrée ou de sortie, l'extrémité libre des fibres affleurant la plaque d'empotage constituant l'autre orifice de sortie ou d'entrée, l'ensemble constituant un module de filtration. Le faisceau et son manchon sont montés dans le carter en matière plastique, moulé d'un seul tenant ou chaudronné à partir d'éléments différents, soit par collage des plaques d'empotage sur la paroi interne du carter soit par empotage du faisceau et/ou de son manchon directement dans le carter. La mise en place du faisceau dans le carter ne pose pas de problèmes particuliers pour les faisceaux utilisés jusqu'à présent dont le diamètre ne dépasse généralement pas une dizaine de cm pour une hauteur de l'ordre de 1m.

Par contre si l'on veut utiliser pour une production a grande échelle de produit filtré, des faisceaux de grandes dimensions obtenus par exemple en réunissant au niveau de la plaque tubulaire plusieurs faisceaux élémentaires (voir EP 335760), il devient plus difficile de positionner correctement le faisceau final dans le carter et de le maintenir en place, les pressions exercées en fonctionnement pouvant à terme entraîner une rupture de la liaison entre la plaque tubulaire et le carter.

L'invention résout le problème en fournissant un carter pour module de filtration, comportant des dispositifs de butée et de centrage, situés à faible distance des extrémités du carter. A l'extrémité qui sera l'extrémité inférieure du module après son montage vertical, se trouve un anneau de butée, tandis qu'à l'autre extrémité est prévue une bague de centrage.

Avantageusement l'anneau de butée comporte une première section tronconique qui assure également un centrage de l'extrémité inférieure du faisceau et une seconde section horizontale qui sert de butée. Une telle forme permet en outre de faciliter le démoulage du carter quand l'anneau de butée est venu de moulage. La bague de centrage est rapportée, par collage par exemple. La bague de centrage a de préférence une section carrée ou rectangulaire.

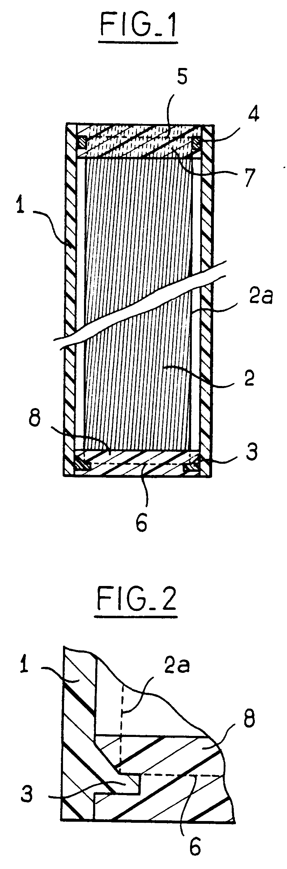

Des modes de réalisation particulièrement avantageux sont décrits de façon détaillée ci-dessous, en référence aux dessins dans lesquels la figure 1 représente en coupe un module de filtration comprenant un carter selon l'invention et la figure 2 représente de façon agrandie un anneau de butée venu de moulage.

Un carter 1 en matière plastique moulée contient un faisceau 2 de fibres, subdivisé ou non en faisceaux élémentaires. Le faisceau unique ou chacun des faisceaux élémentaires est contenu dans un manchon 2a en matière plastique perforée n'entravant pas le passage du liquide. Pour simplifier sa lecture, la figure 1 illustre le cas d'un faisceau unique donc d'un manchon unique. Par ailleurs, un carter comportant plusieurs faisceaux et plusieurs manchons est décrit, par exemple, dans le brevet EP 335 760.

A faible distance d'une de ses extrémités, qui sera l'extrémité inférieure du manchon monté verticalement comme représenté sur la figure 1, il est prévu un anneau de butée 3 sur lequel viendra s'appuyer le bord inférieur 6 du manchon 2a lorsqu'il sera mis en place. L'anneau de butée 3 comporte de préférence une première surface tronconique évasée vers le haut sur laquelle viendra glisser le bord inférieur 6 du manchon avant de venir s'appuyer sur une deuxième surface horizontale de butée.

L'utilisation d'une première section tronconique facilite la mise en place de la partie inférieure du manchon mais on peut éventuellement se contenter d'utiliser soit un anneau horizontal servant uniquement de butée soit un anneau en équerre assurant centrage et butée, mais la mise en place est plus délicate.

L'anneau de butée peut être rapporté (figure 1) ou venu de moulage (figure 2).

A la partie supérieure du manchon, on prévoit une bague de centrage 4 rapportée par exemple par collage. Cette bague peut être faite de la même matière plastique que le carter ou en tout autre matériau pouvant être fixe solidement dans le carter et ayant une bonne adhérence vis-a-vis de la résine utilisée pour l'empotage des extrémités des fibres. La largeur de la bague correspond à l'écartement existant entre le carter et le faisceau et ses hauteur et largeur peuvent être égales (section carrée) ou différentes (section rectangulaire). La bague est fixée à un niveau tel que le bord supérieur 5 du manchon et le bord supérieur de la bague sont sensiblement alignés.

Une fois que le faisceau 2 est en place dans le carter, on procède à l'empotage d'une extrémité puis de l'autre en s'assurant que la résine pénètre au-delà de l'anneau de butée et au-delà de la bague de centrage, ce qui assure un excellent ancrage du faisceau dans le carter. Deux plaques tubulaires 7 et 8 sont ainsi constituées.

La présence des deux dispositifs de butée et centrage offre en outre l'avantage suivant. On sait que les résines utilisées pour l'empotage peuvent présenter une plus faible adhérence sur le matériau du manchon que sur les fibres de filtration. Pour éviter donc toute fuite/pénétration à la surface de la résine d'empotage, on doit empoter au-delà du manchon donc laisser les fibres dépasser un peu de ce manchon, avec le risque qu'une fibre vienne se placer à la périphérie de la plaque et ne crée de ce fait une fuite entre la plaque et le carter. La bague assurant un espacement constant entre le faisceau et le carter, ce risque est totalement supprimé.

## Revendications

1. Carter pour modules de filtration à faisceaux de fibres creuses, en matière plastique, caractérisé en ce qu'il renferme un ou plusieurs faisceau(x) de fibres creuses, dont chacun est contenu dans un manchon (2a), en ce qu'il comporte un anneau de butée (3) intérieure, ayant une section horizontale qui sert de butée, près de l'extrémité qui sera l'extrémité inférieure après montage vertical du module, et une bague de centrage (4) à faible distance de l'autre extrémité, le ou les faisceau(x) étant fixé(s) dans le carter (1) par empotage, au moyen d'une résine pénétrant au deltà de l'anneau de butée (3) et de la bague de centrage (4), autour du ou des faisceau(x).

2. Carter selon la revendication 1, caractérisé en ce que l'anneau de butée (3) comporte une section tronconique évasée vers le haut et une section horizontale.

3. Carter selon la revendication 1 ou 2, caractérisé en ce que l'anneau de butée (3) est venu de moulage.

4. Carter selon l'une quelconque des revendications 1 à 3, caractérisé en ce que la bague de centrage (4) est rapportée.

5. Carter selon la revendication 4, caractérisé en ce que la bague de centrage (4) est de section carrée ou rectangulaire.

## Claims

1. A housing made of plastic material for filter modules comprising hollow fiber bundles, characterized in that it contains one or more bundles of hollow fibers, each of which is received in a sleeve (2a), in that it includes an inner abutment ring (3) having an horizontal section which is for abutment, close to that end which will be the bottom end after vertical mounting of the module, and a centering ring (4) adjacent to the opposite end, the bundle(s) being secured in the housing (1) by potting, by means of a resin entering beyond the abutment ring (3) and the centering ring (4), around the bundle(s).

2. A housing according to claim 1, characterized in that the abutment ring (3) has a downwardly tapering section and a horizontal section.

3. A housing according to claim 1 or 2, characterized in that the abutment ring (3) is integrally molded with the housing.

4. A housing according to claims 1 to 3, characterized in that the centering ring (4) is an add-on part.

5. A housing according to claim 4, characterized in that the centering ring (4) is square or rectangular in section.

## Patentansprüche

1. Gehäuse aus Kunststoff für Filtereinheiten mit Bündein von hohlen Fasern, dadurch gekennzeichnet, daß es ein oder mehrere Bündel von hohlen Fasern einschließt, von denen jedes in einer Hülse (2a) enthalten ist, daß es einen inneren Drucklagerring (3) mit einem als Drucklager dienenden horizontalen Abschnitt nahe dem Ende, das nach vertikaler Montage der Einheit das untere Ende sein wird, und einen Zentrierring (4) in geringem Abstand vom anderen Ende aufweist, wobei das oder die Bündel im Gehäuse (1) durch Vergießen mit einem Harz befestigt ist bzw. sind, das über den Drucklagerring (3) und den Zentrierring (4) um das oder die Bündel herum eindringt.

2. Gehäuse nach Anspruch 1, dadurch gekennzeichnet, daß der Drucklagerring (3) einen kegelstumpfförmigen Abschnitt, der sich nach oben erweitert, und einen horizontalen Abschnitt aufweist.

3. Gehäuse nach Anspruch 1 oder 2, dadurch gekennzeichnet, daß der Drucklagerring (3) durch Formung hergestellt ist.

4. Gehäuse nach einem der Ansprüche 1 bis 3, dadurch gekennzeichnet, daß der Zentrierring (4) angefügt ist.

5. Gehäuse nach Anspruch 4, dadurch gekennzeichnet, daß der Zentrierring (4) quadratischen oder rechteckigen Querschnitt hat.
